# EUROPÄISCHE PATENTSCHRIFT

(11) **EP 1 342 546 B1**
(45) Veröffentlichungstag und Bekanntmachung des Hinweises auf die Patenterteilung: **28.09.2011**
(21) Anmeldenummer: 03005075.1
(22) Anmeldetag: 07.03.2003
(51) Int. Cl.: B29C 45/17

(54) **Spritzgiesswerkzeug mit Schieber aus beweglichen Segmenten**
Injection mould with core of movable segments
Moule d'injection avec un noyau de segments mobile

(30) Priorität: 08.03.2002 DE 10210076
(43) Veröffentlichungstag der Anmeldung: 10.09.2003
(73) Patentinhaber: ICOS GmbH, 38228 Salzgitter (DE)
(72) Erfinder: Kelpe, Hans-Rudolf, 31249 Hohenhameln (DE); Pichler, Ernst, 30827 Garbsen (DE)
(74) Vertreter: Stoffregen, Hans-Herbert

(56) Entgegenhaltungen:
- EP-A- 0 529 080
- PATENT ABSTRACTS OF JAPAN vol. 1998, no. 10, 31. August 1998 (1998-08-31) -& JP 10 113944 A (HOWA KASEI KK), 6. Mai 1998 (1998-05-06)

## Beschreibung

Spritzgießwerkzeug zur Herstellung eines Formteils mit zumindest einem einen Hohlraum einschließenden doppelwandigen von einer ersten und einer dieser gegenüberliegenden zweiten Hohlraumwandung begrenzten ersten Abschnitt und an diesem sich seitlich anschließenden zweiten Abschnitten, wobei der erste Abschnitt durch Fluidinjektion und Verstellen eines aus mehreren beim Injizieren des Fluids zueinander verstellbaren Segmenten bestehenden Schiebers einen Formhohlraum des Spritzgießwerkzeuges bildet, wobei sich der Schieber beim Spritzen von Kunststoff in einer Spritzstellung befindet und zum Ausbilden des Hohlraums in eine Endestellung bewegbar ist und wobei die Segmente mit ihren Stirnflächen schieberseitig auszubildende Hohlraumwandung abstützen.

Aus der DE 195 25 000 C1 ist ein Spritzgießwerkzeug zur Herstellung eines aus Kunststoff bestehenden Kastens bekannt, der einen Boden und vier rechtwinklig von demselben abstehende zusammenhängende Wände aufweist und bei dem mindestens eine der Wände an ihrem dem Boden abgewandten Ende eine durch eine Durchbrechung derselben gebildete Griffleiste aufweist, die unter Einschluss eines Hohlraums doppelwandig ausgebildet ist. Dabei kann die Griffleiste durch Einspritzung im Spritzgießwerkzeug über eine Formbacke mit Schieber in der Formbacke ausgebildet werden. Entsprechende Handgriffe neigen jedoch dazu, im Übergangsbereich zwischen Hohlraum und angrenzendem Vollmaterial eingedrückt zu werden, da sich beim Ausbilden des Hohlraums durch den Schieber bedingt Temperaturprofile einstellen, die die innige Verbindung des Kunststoffs zwischen Vollmaterial und Wandung des Griffes beeinträchtigen können. Mit anderen Worten entsteht im Übergangsbereich zwischen der schieberseitigen Begrenzungswandung des Hohlraums und angrenzenden Abschnitten eine äußerlich sich als Naht bemerkbare Unstetigkeit, in deren Bereich der Griff beschädigt werden kann.

Aus der DE 40 02 503 C1 sind ein Verfahren und eine Vorrichtung zum Herstellen von hohlgespritzen Formkörpern aus Kunststoff bekannt. Der Formkörper weist Dünn- und Dickstellenbereiche auf, wobei den Dickstellenbereichen entsprechende Dickstelleninnenräume eines Formhohlraums durch ein im Sinne eines Verdrängungskörpers wirkendes Zusatzwerkzeug volumenmäßig veränderbar sind.

Der JP-A-10-1139544 ist ein Spritzgießwerkzeug mit einem Schieber zu entnehmen, der zweiteilig ausgebildet ist, die zueinander verstellbar sind, um einen Hohlraum in einem Spritzgussteil ausbilden zu können.

Ein Spritzgießwerkzeug mit einem Schieber, der mehrere zueinander beabstandete eine Kammgeometrie bildende Abschnitte aufweist, ist der nächstkommenden EP-A-0 529 080 zu entnehmen.

Der vorliegenden Erfindung liegt das Problem zugrunde, ein Spritzgießwerkzeug der eingangs genannten Art derart weiterzubilden, dass sich eine an einem Schieber abstützende Hohlraumwandung derart mit sich angrenzendem Kunststoffmaterial verbindet, dass die Gefahr von Beschädigungen beim Gebrauch des Formteils ausgeschlossen oder nahezu ausgeschlossen ist.

Erfindungsgemäß wird zur Lösung des Problems im Wesentlichen vorgeschlagen, dass in Spritzstellung des Schiebers der Verlauf der Stirnflächen der beim Injizieren verstellbaren Segmente in Bezug auf den Formhohlraum einen konvexen Geometrieverlauf aufweisen. Dabei sind insbesondere die Segmente parallel zur Schieberbewegungsrichtung angeordnet bzw. verschiebbar.

Erfindungsgemäß wird ein Schieber zur Ausbildung eines Hohlraums vorgeschlagen, der in Spritzstellung zur Begrenzungswandung eines auch als Spritzkanal zu bezeichnenden Formhohlraums derart ausgerichtet ist, dass der Querschnitt des Formhohlraums im Mittenbereich des auszubildenden Hohlraums - bezogen auf dessen Längsachse - geringer als in den Randbereichen ist, also denjenigen, an denen sich die zweiten aus Vollmaterial bestehenden Abschnitte des fertigen Formteils anschließen. Dabei können die zweiten Abschnitte selbst Begrenzungswandungen sein, die zum Beispiel zwischen aneinandergrenzenden Hohlräumen verlaufen.

Aufgrund der erfindungsgemäßen Lehre geht die beim Verstellen des Schiebers mitgeführte zweite Begrenzungswandung des sich ausbildenden Hohlraums außenseitig bereits zu Beginn der Fluidinjektion stetig oder nahezu stetig in den jeweiligen zweiten Abschnitt über, so dass sich temperaturbedingte Unstetigkeiten nicht oder nicht wirksam ausbilden können mit der Folge, dass die den Hohlraum endseitig begrenzenden Wandungen eine hohe Stabilität zeigen.

Insbesondere sieht die Erfindung vor, dass die Segmente zueinander zwangsgekoppelt derart bewegt werden, dass beim Verstellen des die innere Abstützfläche aufweisenden Segments aus der Spritzstellung heraus diese sukzessiv direkt bzw. indirekt die angrenzenden Segmente mitbewegt. Hierzu können die Segmente formschlüssig miteinander verbunden sein und über den Verschiebeweg der Segmente hineinragende Vorsprünge wie Anschläge im erforderlichen Umfang mitgenommen werden. Somit ist es allein erforderlich, dass das bzw. die inneren Segmente unmittelbar mit einem Stellzylinder oder einem sonstigen Element verbunden sind, wohingegen die angrenzenden Segmente von dem aktiv verstellten Segment bzw. Segmenten mitgenommen werden.

In der Spritz- oder Blasstellung weisen folglich die Abstützflächen der zweiten Segmente in Bezug auf den Spritzkanal einen konvexen Verlauf auf, wohingegen nach Ausbilden des Hohlraums die Abstützflächen in oder im Wesentlichen in einer gemeinsamen Ebene verlaufen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung der den Zeichnungen zu entnehmenden bevorzugten Ausführungsbeispielen.

Es zeigen:
- Fig. 1: eine Prinzipdarstellung eines Bewegungsablaufes eines Schiebers nach dem Stand der Technik zur Ausbildung eines Hohlraums in einem Kunststoffformteil,
- Fig. 2: eine Prinzipdarstellung eines erfindungsgemäß ausgebildeten Schiebers zur Ausbildung eines Hohlraums in einem Kunststoffformteil,
- Fig. 3: eine perspektivische Darstellung eines Ausschnitts eines Handgriffs eines Kunststoffformteils,
- Fig. 4: eine Prinzipdarstellung eines im Bereich einer Seite eines Transportkasten ausgebildeten Hohlraums,
- Fig. 5: eine Versteifung einer Wandung eines Kunststoffformteils durch Ausbildung eines Hohlraums,
- Fig. 6: eine Prinzipdarstellung eines Ausschnitts eines Spritzgießwerkzeuges mit erfindungsgemäß ausgebildetem Schieber und
- Fig. 7: eine weitere Ausführungsform eines im Ausschnitt und rein prinzipiell dargestellten Spritzgießwerkzeuges mit erfindungsgemäß ausgebildetem Schieber.

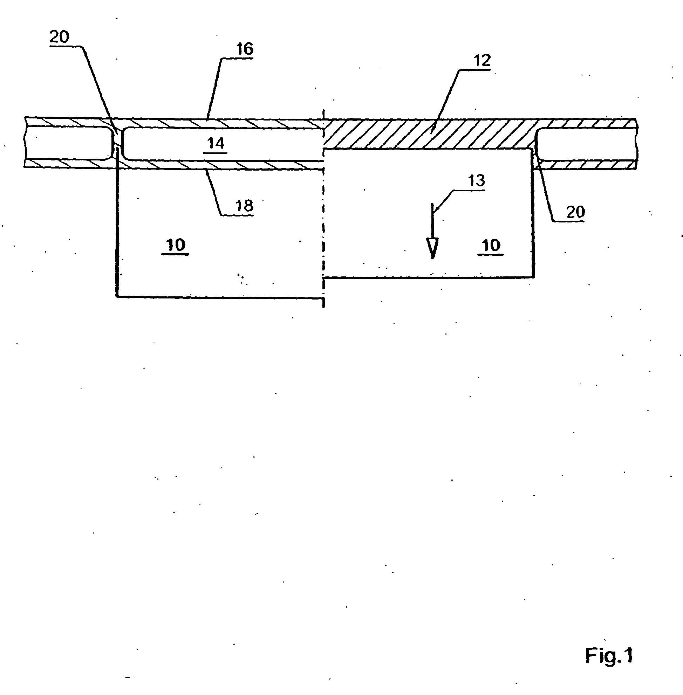

Um beim Spritzgießen in einem Abschnitt eines herzustellenden Formteils wie zum Beispiel Griff eines Flaschenkastens einen Hohlraum auszubilden, kann nach dem Stand der Technik das sogenannte Duplex-Airmould-Verfahren angewendet werden. Hierzu wird in einen auch als Spritzkanal zu bezeichnenden Formhohlraum 12 ein Schieber 10 in Spritzstellung gebracht, um nach eingespritztem Kunststoff den Schieber 10 in Pfeilrichtung 13 bei gleichzeitiger Injektion eines Fluides, insbesondere Gas ― gegebenenfalls auch Flüssigkeit wie Wasser ― zu verstellen, wodurch sich ein gewünschter Hohlraum 14 ausbildet, der von gegenüberliegenden ersten und zweiten Begrenzungswandungen 16, 18 begrenzt ist. Da vor dem Verstellen des Schiebers 10, also in der Spritzstellung (rechte Darstellung in Fig. 1) angrenzend an den Schieber sich ein vollständig mit Kunststoff gefüllter Bereich (Abschnitt 20) ausbildet, wobei der Kunststoff bereits Wärme an den Schieber 10 abgibt, bildet sich beim Zurückziehen des Schiebers 10 eine Nahtstelle zwischen dem Abschnitt 20 und der bei zurückgezogenem Schieber 10 ausgebildeten zweiten Begrenzungswandung 18 mit der Folge aus, dass die Begrenzungswandung 18 bei Gebrauch im Bereich des Abschnitts 20 eingedrückt werden kann. Der eine entsprechende Materialunstetigkeit bildende Übergang ist optisch durch eine durch das Verstellen des Schiebers 10 bedingte Naht wahrnehmbar.

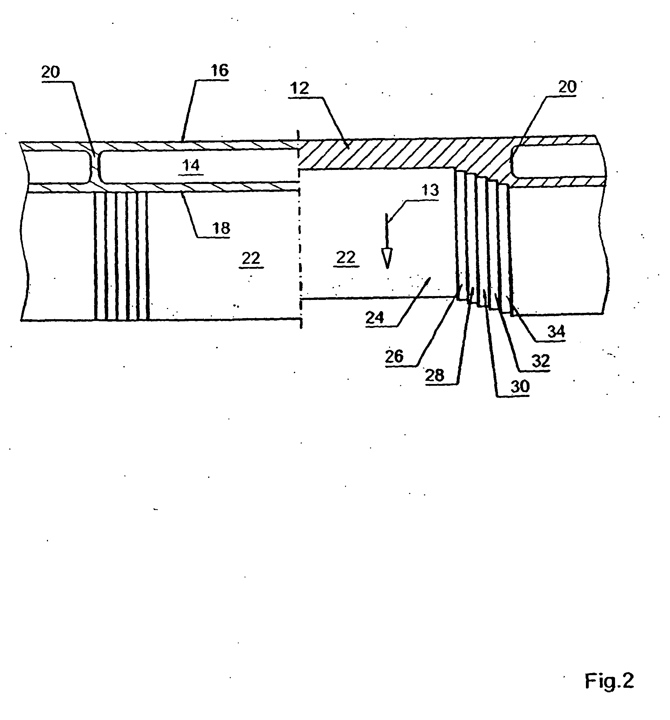

Um eine diesbezügliche Unstetigkeit auszuschließen, wird erfindungsgemäß ein Schieber 22 vorgeschlagen, der aus Segmenten 24, 26, 28, 30, 32, 34 besteht, die in Spritzstellung in Bezug auf den Spritzkanal 12 einen konvexen Verlauf zeigen, d.h. dass der Querschnitt des Spritzkanals 12 im Bereich der äußeren Abschnitte 20 einen größeren Querschnitt als im Mittenbereich aufweist. Hierdurch bedingt kann sich ein Temperaturgradient zwischen sich ausbildender beim Injizieren eines Fluids verstellbaren Begrenzungswand 18 und dem Abschnitt 20 nicht oder nicht in einem Umfang ausbilden, dass die gewünschte innige Verbindung zwischen der Begrenzungswandung 18 und dem Abschnitt 20 unterbleibt. Dabei weisen entsprechend der Darstellung der Fig. 2 die äußeren Segmente 26, 28, 30, 32, 34, die auch als Lamellen zu bezeichnen sind, in Längsrichtung des Hohlraums 14 betrachtet eine erheblich geringere Erstreckung als mittlerer Abschnitt 24 auf.

Beim Injizieren des Fluids wird der Schieber 22 ebenfalls in Pfeilrichtung 13 verstellt, wobei das mittlere Segment 24 mit den äußeren Segmenten 26, 28, 30, 32, 34 derart zwangsgekoppelt ist, dass letztere sukzessiv mitgenommen werden. In Blasstellung (linke Darstellung in Fig. 2) verlaufen die die zweite oder schieberseitig verlaufende Begrenzungswand 18 abstützenden Stirn- oder Abstützflächen der Segmente 24, 26, 28, 30, 32, 34 in oder im Wesentlichen in einer Ebene.

Eine Zwangskopplung der Bewegung der Segmente 24, 26, 28, 30, 32, 34 kann dadurch bewirkt werden, dass die Segmente 24, 26, 28, 30, 32, 34 in ihren aneinanderliegenden Flächen formschlüssig ineinander greifen und ein Mitnehmen durch entsprechende Anschläge erfolgt. Andere Kopplungsmöglichkeiten sind selbstverständlich gleichfalls möglich.

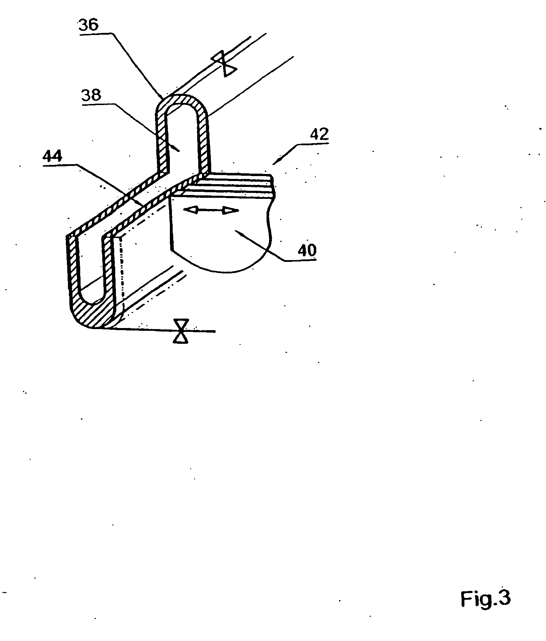

Aufgrund der erfindungsgemäßen Lehre können insbesondere Griffe 36 (Fig. 3) von Kästen wie Flaschenkästen ausgebildet werden. So erkennt man an der Prinzipdarstellung der Fig. 3, dass zur Ausbildung eines Hohlraums 38 ein Schieber 40 benutzt wird, der an seinem jeweiligen Ende 42 nicht näher gekennzeichnete Segmente oder Lamellen - die auch als Übergangs- oder Nachlauflamellen bezeichnet werden können - aufweist, die in Spritzstellung in Bezug auf das mittlere Segment zurückversetzt angeordnet sind, um einen stetigen Übergang zwischen der sich ausbildenden Begrenzungswand 44 des Hohlraums 38 und angrenzendem Bereich des Griffs 36 zu erzielen.

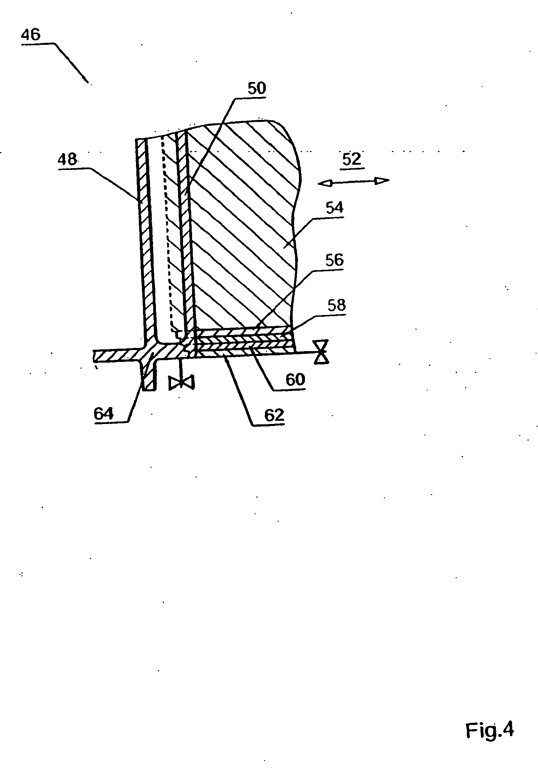

Aber nicht nur Griffe, sondern auch Wandungen selbst können entsprechend der Darstellung in Fig. 4 erfindungsgemäß doppelwandig ausgebildet werden. So ist der Fig. 4 ein Ausschnitt einer Begrenzungswandung 46 eines Formteils wie Kastens zu entnehmen, die doppelwandig ausgebildet ist, also aus inneren und äußeren Wandungen 48, 50 besteht, wobei die sich beim Spritzen ausbildende Begrenzungswand - im Ausrührungsbeispiel die äußere Begrenzungswand 50 - von einer Abstützfläche eines Schiebers 52 abgestützt ist, der seinerseits aus einem Hauptsegment 54 und äußeren in Längsrichtung des Hohlraums eine geringere Erstreckung aufweisenden Segmenten oder Lamellen 56, 58, 60, 62 zusammengesetzt ist, die in Spritzstellung eine Gesamtabstützfläche bilden, die in Bezug auf die innere Begrenzungswandung 48 entsprechend der erfindungsgemäßen Lehre einen konvexen Verlauf zeigt. Hierdurch bedingt ist sichergestellt, dass sich zwischen der äußeren Begrenzungswandung 50 und Boden 64 des Formteils eine Materialunstetigkeit nicht ausbildet, die ansonsten zu einer Bruchstelle führen könnte.

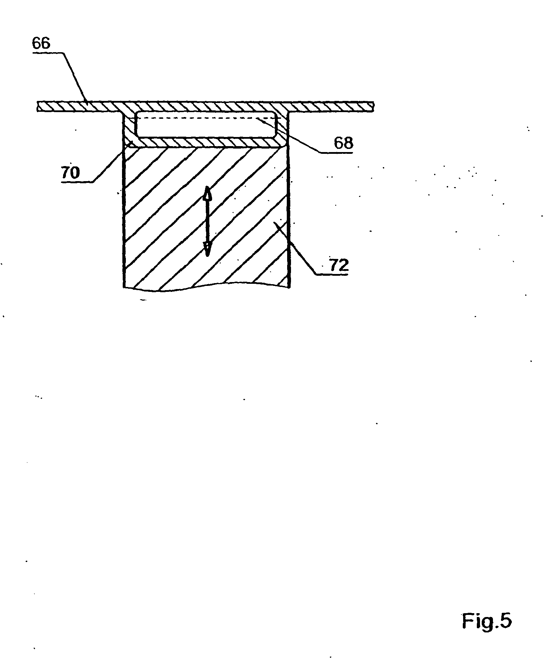

In Fig. 5 ist rein prinzipiell eine Wandung 66 mit einer einen Hohlraum 68 umgebenden Versteifungsrippe 70 dargestellt. Dabei wird die Rippe 70 durch Verstellen eines Schiebers 72 zur Ausbildung des Hohlraums 68 ausgebildet, wobei der Schieber 72 einen konstruktiven Aufbau aufweist, der prinzipiell dem der Fig. 2 entspricht.

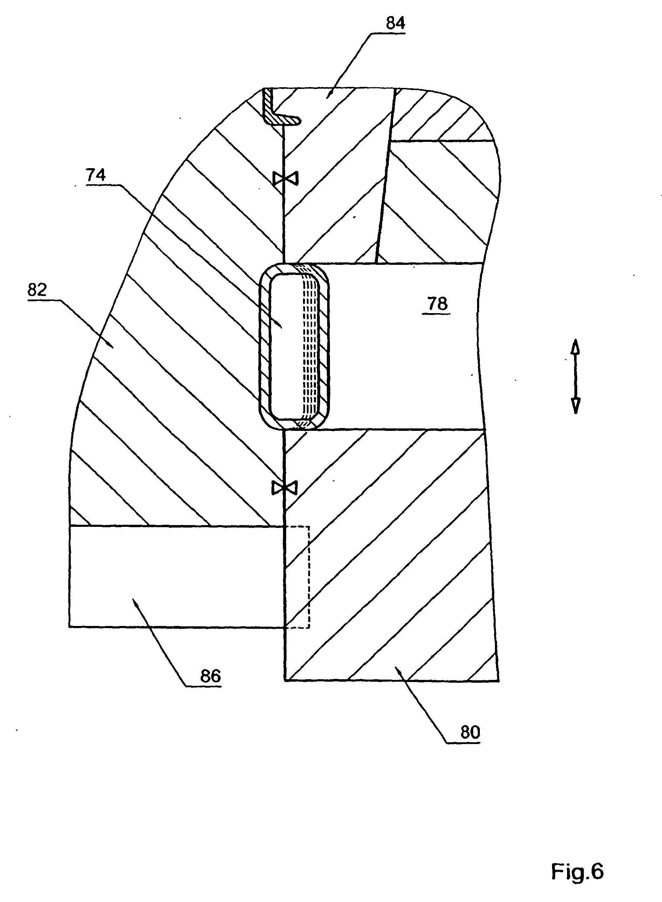

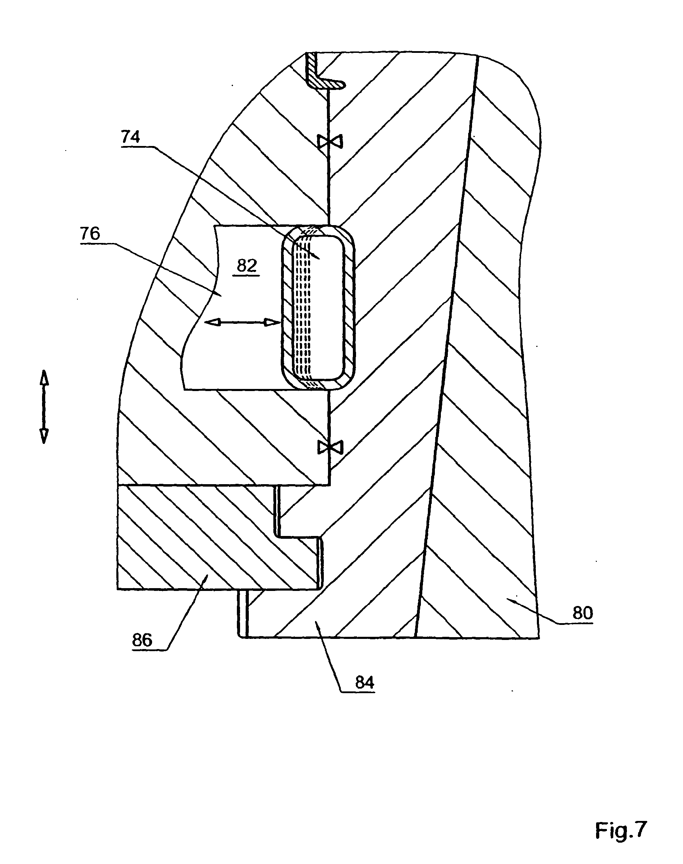

Die Fig. 6 und 7 sollen verdeutlichen, dass ein Hohlraum 74 mittels eines mehrere Segmente bzw. Hauptsegment und Nachlauflamellen umfassenden erfindungsgemäß ausgebildeten Schiebers 76, 78 ausbildbar ist, der in einem Hauptkern 80 (Fig. 6) oder in einer Formbacke 82 (Fig. 7) eines Spritzgießwerkzeuges verstellbar angeordnet ist. Bei den weiteren den Fig. 6 und 7 rein prinzipiell zu entnehmenden Werkzeugteilen handelt es sich in bekannter Weise um einen Kemschieber 84 sowie einen Abstreifrahmen 86.

## Patentansprüche

1. Spritzgießwerkzeug zur Herstellung eines Formteils (36, 46) mit zumindest einem einen Hohlraum (14) einschließenden doppelwandigen von einer ersten und einer dieser gegenüberliegenden zweiten Hohlraumwandung (16, 18) begrenzten ersten Abschnitt und an diesem sich seitlich anschließenden zweiten Abschnitten (20), wobei der erste Abschnitt durch Fluidinjektion und Verstellen eines aus mehreren beim Injizieren des Fluids zueinander verstellbaren Segmenten (24, 26, 28, 30, 32, 34, 54, 56, 58, 60, 62, 64) bestehenden Schiebers (22, 40, 52, 72, 76, 78) einen Formhohlraum (12) des Spritzgießwerkzeuges bildet, wobei sich der Schieber beim Spritzen von Kunststoff in einer Spritzstellung befindet und zum Ausbilden des Hohlraums in eine Endstellung bewegbar ist und wobei die Segmente mit ihren Stirnflächen schieberseitig auszubildende Hohlraumwandung (18) abstützen,
**dadurch gekennzeichnet,**
**dass** in Spritzstellung des Schiebers (22, 40 52, 72, 76, 78) der Verlauf der Stirnflächen der beim Injizieren verstellbaren Segmente (24, 26, 28, 30, 32, 34, 54, 56, 58, 60, 62, 64) in Bezug auf den Formhohlraum (12) einen konvexen Geometrieverlauf aufweisen.

2. Spritzgießwerkzeug nach Anspruch 1,
**dadurch gekennzeichnet,**
**dass** die Segmente (24, 26, 28, 30, 32, 34, 54, 56, 58, 60, 62, 64) parallel zur Schieberbewegungsrichtung angeordnet bzw. verschiebbar sind.

3. Spritzgießwerkzeug nach Anspruch 1 oder 2,
**dadurch gekennzeichnet,**
**dass** der Schieber (22) aus zumindest einem inneren Segment (24) und an diesem sich anschließenden äußeren Segmenten (26, 28, 30, 32, 34) zusammengesetzt ist, die an den zweiten Abschnitten (20) des Hohlraums (14) angrenzen.

4. Spritzgießwerkzeug nach Anspruch 3,
**dadurch gekennzeichnet,**
**dass** den zweiten Abschnitten (20) naheliegende Abstützflächen der äußeren Segmente (26, 28, 30, 32, 34) eine geringere flächige Erstreckung als Abstützfläche des inneren Segments (24) aufweisen.

5. Spritzgießwerkzeug nach zumindest Anspruch 4,
**dadurch gekennzeichnet,**
**dass** die Abstützflächen der Segmente (24, 26, 28, 30, 32, 34) in Spritzstellung stufenförmig ineinander übergehen.

6. Spritzgießwerkzeug nach zumindest einem der vorhergehenden Ansprüche,
**dadurch gekennzeichnet,**
**dass** die Segmente (24, 26, 28, 30, 32, 34) zueinander zwangsgekoppelt derart bewegbar sind, dass beim Verstellen des Segments (24) dieses sukzessiv direkt bzw. indirekt die angrenzenden Segmente (26, 28, 30, 32, 34) mitbewegt.

7. Spritzgießwerkzeug nach zumindest einem der vorhergehenden Ansprüche,
**dadurch gekennzeichnet,**
**dass** die Segmente (24, 26, 28, 30, 32, 34) formschlüssig untereinander verbunden sind.

8. Spritzgießwerkzeug nach zumindest einem der vorhergehenden Ansprüche,
**dadurch gekennzeichnet,**
**dass** die Segmente (24, 26, 28, 30, 32, 34) durch in deren Schiebeweg sich erstreckende Anschläge in ihrer Bewegung zwangsgekoppelt sind.

9. Spritzgießwerkzeug nach zumindest einem der vorhergehenden Ansprüche,
**dadurch gekennzeichnet,**
**dass** die äußeren Segmente (26, 28, 30, 32, 34) symmetrisch zum inneren Segment (24) verlaufen.

10. Spritzgießwerkzeug nach zumindest einem der vorhergehenden Ansprüche,
**dadurch gekennzeichnet,**
**dass** die äußeren Segmente (26, 28, 30, 32, 34) eine gleiche oder im Wesentlichen gleiche Abstützflächenerstreckung aufweisen.

## Claims

1. Injection mold for manufacturing of a shaped part (36, 46) having at least a first double-walled section limited by a first cavity wall and a second one opposite thereto (16, 18) and enclosing a cavity (14), and second sections (20) laterally adjoining said first section, the latter forming, by fluid injection and by adjustment of a slide (22, 40, 52, 72, 76, 78) comprising a plurality of segments (24, 26, 28, 30, 32, 34, 54, 56, 58, 60, 62, 64) adjustable relative to one another during injection of the fluid, a mold cavity (12) of the injection mold, where the slide is in an injecting position during plastic injection and is movable to an end position for forming the cavity, and where the segments support with their end surfaces the cavity wall (18) to be formed on the slide side,
wherein
in the injecting position of the slide (22, 40, 52, 72, 76, 78) the shape of the end surfaces of the segments (24, 26, 28, 30, 32, 34, 54, 56, 58, 60, 62, 64) adjustable during injection has a convex geometry relative to the mold cavity (12).

2. Injection mold according to Claim 1,
wherein
the segments (24, 26, 28, 30, 32, 34, 54, 56, 58, 60, 62, 64) are arranged and/or movable parallel to the slide movement direction.

3. Injection mold according to Claim 1 or 2,
wherein
the slide (22) is composed of at least an inner segment (24) and outer segments (26, 28, 30, 32, 34) adjoining said inner segment and adjacent to the second sections (20) of the cavity (14).

4. Injection mold according to Claim 3,
**wherein**
those support surfaces of the outer segments (26, 28, 30, 32, 34) close to the second sections (20) have a smaller planar extent than the support surface of the inner segment (24).

5. Injection mold according to at least Claim 4,
**wherein**
the support surfaces of the segments (24, 26 28, 30, 32, 34) merge into one another in step-like manner in the injecting position.

6. Injection mold according to at least one of the preceding claims,
**wherein**
the segments (24, 26, 28, 30, 32, 34) are movable with forcible coupling relative to one another such that during adjustment of the segment (24) the latter successively moves the adjacent segments (26, 28, 30, 32, 34) directly or indirectly.

7. Injection mold according to at least one of the preceding claims,
**wherein**
the segments (24, 26, 28, 30, 32, 34) are interconnected by form-locking.

8. Injection mold according to at least one of the preceding claims,
**wherein**
the segments (24, 26, 28, 30, 32, 34) are forcibly coupled in their movement by stops extending in their sliding path.

9. Injection mold according to at least one of the preceding claims,
**wherein**
the outer segments (26, 28, 30, 32, 34) run symmetrically to the inner segment (24).

10. Injection mold according to at least one of the preceding claims,
**wherein**
the outer segments (26, 28, 30, 32, 34) have an identical or substantially identical extent of the support surface.

## Revendications

1. Moule pour injection destiné à fabriquer une pièce moulée (36, 46), comprenant au moins une première partie à double paroi incluant une cavité (14) et limitée par une première paroi de cavité et une seconde paroi de cavité (16, 18) opposées, et des deuxièmes parties (20) s'y raccordant latéralement, sachant que la première partie forme une cavité de moulage (12) du moule pour injection obtenue par injection de fluide et déplacement d'un poussoir (22, 40, 52, 72, 76, 78) constitué de plusieurs segments (24, 26, 28, 30, 32, 34, 54, 56, 58, 60, 62, 64) réglables les uns par rapport aux autres lors de l'injection du fluide, sachant que lors de l'injection de matière synthétique, le poussoir se trouve dans une position d'injection et peut être amené dans une position finale pour former la cavité, et sachant que les segments étayent avec leurs faces frontales côté poussoir la paroi de cavité (18) à former,
**caractérisé en ce**
**que** dans la position d'injection du poussoir (22, 40, 52, 72, 76, 78), le tracé des faces frontales des segments (24, 26, 28, 30, 32, 34, 54, 56, 58, 60, 62, 64) réglables lors de l'injection présente une géométrie convexe par rapport à la cavité de moulage (12).

2. Moule pour injection selon la revendication 1,
**caractérisé en ce**
**que** les segments (24, 26, 28, 30, 32, 34, 54, 56, 58, 60, 62, 64) sont disposés et/ou sont mobiles parallèlement à la direction de déplacement du poussoir.

3. Moule pour injection selon la revendication 1 ou 2,
**caractérisé en ce**
**que** le poussoir (22) est composé d'au moins un segment intérieur (24) et de segments extérieurs (26, 28, 30, 32, 34) qui se raccordent au segment intérieur et jouxtent les deuxièmes parties (20) de la cavité (14).

4. Moule pour injection selon la revendication 3,
**caractérisé en ce**
**que** les faces d'appui des segments extérieurs (26, 28, 30, 32, 34) situées à proximité des deuxièmes parties (20) présentent une extension en surface plus faible que la face d'appui du segment intérieur (24).

5. Moule pour injection selon au moins la revendication 4,
**caractérisé en ce**
**que** dans la position d'injection, les faces d'appui des segments (24, 26, 28, 30, 32, 34) sont reliées les unes aux autres de manière étagée.

6. Moule pour injection selon au moins une des revendications précédentes,
**caractérisé en ce**
**que** les segments (24, 26, 28, 30, 32, 34) sont mobiles et couplés entre eux de manière forcée de sorte que lors d'un déplacement du segment (24), celui-ci met successivement en mouvement les segments adjacents (26, 28, 30, 32, 34) de manière directe ou indirecte.

7. Moule pour injection selon au moins une des revendications précédentes,
**caractérisé en ce**
**que** les segments (24, 26, 28, 30, 32, 34) sont reliés entre eux par complémentarité de forme.

8. Moule pour injection selon au moins une des revendications précédentes,
**caractérisé en ce**
**que** les segments (24, 26, 28, 30, 32, 34) sont couplés de manière forcée dans leur mouvement par des butées s'étendant sur leur course de déplacement.

9. Moule pour injection selon au moins une des revendications précédentes,
**caractérisé en ce**
**que** les segments extérieurs (26, 28, 30, 32, 34) s'étendent symétriquement par rapport au segment intérieur (24).

10. Moule pour injection selon au moins une des revendications précédentes,
**caractérisé en ce**
**que** les segments extérieurs (26, 28, 30, 32, 34) présentent des surfaces d'appui dont les extensions sont identiques ou quasiment identiques.
